# EUROPÄISCHE PATENTSCHRIFT

(11) **EP 1 597 003 B1**
(45) Veröffentlichungstag und Bekanntmachung des Hinweises auf die Patenterteilung: **07.04.2010**
(21) Anmeldenummer: 04714738.4
(22) Anmeldetag: 26.02.2004
(51) Int. Cl.: B22F 3/105, B29C 67/00

(54) **VERFAHREN ZUR HERSTELLUNG VON MINIATURKÖRPERN ODER MIKROSTRUKTURIERTEN KÖRPERN**
METHOD FOR PRODUCING MINIATURE BODIES OR MICROSTRUCTURED BODIES
PROCEDE DE PRODUCTION DE CORPS MINIATURES OU DE CORPS MICROSTRUCTURES

(30) Priorität: 26.02.2003 DE 10309519
(43) Veröffentlichungstag der Anmeldung: 23.11.2005
(73) Patentinhaber: 3D-Micromac AG, 09126 Chemnitz (DE)
(72) Erfinder: EBERT, Robby, 09114 Chemnitz (DE); EXNER, Horst, 09648 Mittweida (DE); HARTWIG, Lars, 09648 Mittweida (DE); KEIPER, Bernd, 09217 Burgstädt (DE); KLÖTZER, Sascha, 07545 Gera (DE); REGENFUSS, Peter, 09648 Mittweida (DE)
(74) Vertreter: Bauer, Steffen
(86) Internationale Anmeldenummer: PCT/EP2004/001892
(87) Internationale Veröffentlichungsnummer: WO 2004/076101

(56) Entgegenhaltungen:
- FR-A- 2 678 532
- US-A- 5 637 175

## Beschreibung

Die Erfindung betrifft ein Verfahren zur Herstellung von Miniaturkörpern oder mikrostrukturierten Körpern auf einem Träger in einer Bearbeitungskammer mit Laserstrahlen mindestens eines Lasers im Vakuum oder unter Schutzgas.

In der DE 195 38 257 C2 (Verfahren zum Herstellen eines dreidimensionalen Objektes) wird das herzustellende Objekt mit einer dreidimensionalen Stützkonstruktion aus einem inneren Kernbereich und einem äußeren Hüllbereich versehen. Der Kernbereich wird dabei vorzugsweise doppelt belichtet, so dass eine starke Verfestigung erreicht wird, während der Hüllbereich nur einmal belichtet wird. Der Hüllbereich befindet sich dabei vollflächig zwischen dem Objekt und der Stützkonstruktion. Der Hüllbereich ist weich, so dass mit geringstem Kraft- und Werkzeugaufwand eine Trennung des Objektes von der Stützkonstruktion erfolgen soll. Gleichzeitig ist die Dicke des Hüllbereichs zur Gewährleistung der Funktion als Stützkonstruktion sehr gering. Schwierigkeiten ergeben sich aber bei der Trennung sehr kleiner oder mikrostrukturierter Objekte von der Stützkonstruktion, die bei der Trennung sehr leicht zerstört werden können. Gleichzeitig müssen Angriffsflächen für die Werkzeuge vorhanden sein. Bei mehreren Objekten auf einem Träger ist eine derartige Trennung ohne Zerstörung nur schwer realisierbar, so dass derartige Stützkonstruktionen zur Herstellung mehrerer Miniaturkörper oder mikrostrukturierter Körper auf einem Träger nicht geeignet sind. Dieses Dokument zeigt die Merkmale des Oberbegriffs des Anspruchs 1.

Der Erfindung liegt die Aufgabe zugrunde, Miniaturkörper oder mikrostrukturierte Körper auf einem Träger so herzustellen, dass diese anschließend leicht vom Träger gelöst und/oder auch voneinander separiert werden können.

Diese Aufgabe wird mit den in Patentanspruch 1 aufgeführten Merkmalen gelöst.
Die mit der Erfindung erzielten Vorteile bestehen insbesondere darin, dass sowohl Miniaturkörper als auch mikrostrukturierte Körper leicht herstellbar sind. Die Miniaturkörper und die mikrostrukturierten Körper werden dabei aus schichtweise aufgebrachten Partikeln realisiert. Zwischen dem Träger und den Miniaturkörpern oder mikrostrukturierten Körpern befinden sich Abstandskörper, die gleichfalls aus schichtweise aufgebrachten Partikeln bestehen. Der besondere Vorteil besteht dabei darin, dass diese Abstandskörper mit dem Bestrahlen durch Laserstrahlen so hergestellt werden, dass Partikel partiell flächig, flächig oder linienförmig in der betreffenden Ebene zu kleine Kontaktbereichsstrukturen und Leerstellen aufweisenden, deshalb zerstörbaren und folglich von dem Träger und folglich von den Miniaturkörpern oder mikrostrukturierten Körpern separierbaren Abstandskörpern sintern. Derartige Leerstellen können auch zusammenhängen. Dabei bilden sich Abstandskörper mit einer statischen Festigkeit aus, so dass eine sichere Positionierung der Miniaturkörper oder mikrostrukturierten Körper auf dem Träger und/oder im Pulverbett gegeneinander gegeben ist. Gleichzeitig sind diese Abstandskörper gegen Scherkräfte gering beständig, so dass durch derartige Kräfte eine leichte Ablösung der Miniaturkörper oder mikrostrukturierten Körper erfolgen kann. Ein weiterer Vorteil besteht darin, dass die Miniaturkörper oder mikrostrukturierten Körper und die Abstandskörper aus dem gleichen Material bestehen. Dabei können sowohl die Miniaturkörper oder mikrostrukturierten Körper als auch die Abstandskörper beim Bestrahlen einer Schicht mit den Laserstrahlen realisiert werden. Auskragende Miniaturkörper oder mikrostrukturierte Körper mit Auskragungen sind damit leicht herstellbar und nachfolgend leicht separierbar. Sowohl die Realisierung der separierbaren Abstandskörper als auch die Generierung der Miniaturkörper oder mikrostrukturierten Körper erfolgt dabei schichtweise durch Auftragen und selektives Sintern der Partikel mit den Laserstrahlen eines Lasers. Die Bearbeitungsparameter für die separierbaren Abstandskörper werden so gewählt, dass Partikel partiell flächig, flächig oder linienförmig in der betreffenden Ebene zu kleine Kontaktbereichsstrukturen und Leerstellen aufweisenden, deshalb zerstörbaren und folglich von dem Träger und den entweder Miniaturkörpern oder mikrostrukturierten Körpern separierbaren Abstandskörpern sintern, wodurch eine statische Verfestigung eines definierten Materialvolumens erreicht wird. Dabei entstehen homogene separierbare Abstandskörper mit über den gesamten Querschnitt konstanten Parametern, wobei die ganze Grenzfläche Kontakt mit den Miniaturkörpern oder mikrostrukturierten Körpern hat, und dennoch vollständig ablösbar ist. Auf und in diesen separierbaren Abstandskörper werden aus demselben Material die Miniaturkörper oder mikrostrukturierten Körper durch selektive Bestrahlung mit Laserstrahlen eines oder des Lasers realisiert, wobei hierzu die Parameter so gewählt werden, dass eine scherbeständige Sinterung von Partikeln erzeugt wird. Nach der Realisierung der Miniaturkörper oder mikrostrukturierten Körper auf dem Träger wird dieser mit Ultraschall beaufschlagt, wobei diese sowohl vom Träger als auch von den separierbaren Abstandskörpern ohne andere Hilfsmittel getrennt werden. Dazu wird der Träger mit einer Einrichtung zur Erzeugung von Ultraschall gekoppelt. Beschädigungen der Miniaturkörper oder mikrostrukturierten Körper und des Trägers werden beim Trennen vermieden, so dass auch der Träger ohne Nachbehandlung mehrmals zur Herstellung von Miniaturkörpern oder mikrostrukturierten Körpern verwendet werden kann. Eine vorteilhafte Transportvorrichtung für ein schichtweises Aufbringen von Partikeln auf den Träger ist wenigstens eine Ringrakel mit einer in sich geschlossenen Klinge, die über mindestens ein Konstruktionselement wenigstens in einer Ebene parallel zum Träger entweder sowohl drehbar gelagert als auch mit einem Antrieb gekoppelt ist oder in x- und y-Richtung über gekoppelte Antriebe bewegbar ist. Mit einer derartigen Realisierung kann die Ringrakel mindestens entweder über den Vorratsraum oder eine Fläche neben dem Träger und den Träger geschwenkt oder bewegt werden, wobei schichtweise Partikel entweder aus einem separaten Vorratsraum oder der Ringrakel als Vorratsbehälter in der Ringrakel auf dem Träger aufgebracht werden. Durch das Bestrahlen mit Laserstrahlen des mindestens einen Lasers werden Partikel innerhalb derselben Schicht und von Schicht zu Schicht durch Sintern verbunden, wobei sowohl separierbare Abstandskörper als auch Miniaturkörper oder mikrostrukturierte Körper nach- und/oder nebeneinander entstehen. Dabei können auch vorteilhafterweise mindestens zwei Vorratsräume mit Partikeln verschiedener Materialien zur Anwendung kommen. Dadurch können Schichten aus unterschiedlichen Materialien zu Miniaturkörpern oder mikrostrukturierten Körpern mit vertikalen Eigenschaftsgradienten erzeugt werden. Die Ringrakel gewährleistet ein gleichmäßiges Auftragen von Schichten aus allen Richtungen. Damit ist ein homogener Schichtauftrag gegeben.

Vorteilhafte Ausgestaltungen der Erfindung sind in den Patentansprüchen 2 bis 10 angegeben.

Eine Weiterbildung der Erfindung führt in Ergänzung zusätzlich auch zu separierbaren Abstandskörpern zwischen den Miniaturkörpern oder mikrostrukturierten Körpern. Dadurch können auch hohe Miniaturkörper oder mikrostrukturierte Körper auf einem Träger hergestellt werden. Die separierbaren Abstandskörper verhindern ein Abkippen derartiger Miniaturkörper oder mikrostrukturierter Körper.

Eine weitere Weiterbildung der Erfindung führt zu separierbaren Abstandskörpern zwischen den Miniaturkörpern oder mikrostrukturierten Körpern. Diese bestehen aus wenigstens einem vorgefertigten Körper auf dem wenigstens ein Miniaturkörper oder mikrostrukturierter Körper fest angebunden wird, so dass ein Miniaturkörper oder mikrostrukturierter Körper mit dem vorgefertigten Körper als Bestandteil realisiert wird. Vorteilhafterweise können damit Mikrostrukturen auf vorgefertigte Körper aufgebracht und mit diesen fest verbunden werden, so dass ein mikrostrukturierter Körper hergestellt werden kann.

Eine weitere Weiterbildung der Erfindung, wobei die Pulsfrequenz und die Verfahrgeschwindigkeit des Lasers zur Erzeugung der Miniaturkörper oder mikrostrukturierten Körper und der Abstandskörper gleich und die Laserleistung bei der Herstellung der Abstandskörper kleiner als die bei der Herstellung der Miniaturkörper oder mikrostrukturierten Körper ist, führt zu einem durchgängigem Verfahren. Mehrmaliges Bestrahlen einzelner Bereiche der jeweiligen Schicht wird vermieden. Durch die Beibehaltung der Laserleistung und die Erhöhung der Pulsfrequenz und der Verfahrgeschwindigkeit kann die Herstellung in ökonomisch vorteilhaft kürzerer Zeit erfolgen.

Nach einer weiteren Weiterbildung der Erfindung werden die Schichten aus Partikeln vorteilhafterweise mit einer Drucktechnik, durch Sprühen oder mit wenigstens einer Rakel aufgetragen.

Mit der Maßnahme einer weiteren Weiterbildung der Erfindung 6, wobei die Schicht aus einer Paste mit den Partikeln im Vakuum mit einem Druck unmittelbar über dem Dampfdruck des Binders beaufschlagt und durch Erwärmung mittels Laserstrahlen entbindert werden, erfolgt vorteilhafterweise eine Trennung des Binders von den Partikeln.

Eine weitere Weiterbildung der Erfindung, wobei über das Beaufschlagen des Trägers und/oder der Rakel mit Ultraschall und/oder das horizontale Drehen der Rakel die jeweilige aufgetragene Schicht vor dem Bestrahlen mit Laserstrahlen verdichtet wird, führt vorteilhafterweise zu einem dichten Miniaturkörper oder mikrostrukturierten Körper. Ein weiterer Vorteil besteht beim Beaufschlagen des Trägers mit Ultraschall darin, dass die mit dem Träger gekoppelte Einrichtung zur Erzeugung des Ultraschalls sowohl zum Verdichten der Partikel als auch zur Trennung der Miniaturkörper oder mikrostrukturierten Körper sowohl von den separierbaren Abstandskörpern als auch dem Träger verwendet wird.

Durch die eine weitere Weiterbildung der Erfindung können vorteilhafterweise die Schichten insbesondere aus Pasten gleichmäßig und ohne Zerstörung, welche durch eine entgegen gerichtete Überfahrt hervorgerufen würde, aufgebracht werden.

Eine weitere Weiterbildung der Erfindung erlaubt die Erzeugung von im Mikrometermaßstab homogenen Materialmischungen und/oder vertikalen Material- oder Eigenschaftsgradienten und Material- oder Eigenschaftsgrenzen in den Miniaturkörpern oder mikrostrukturierten Körpern oder die Erzeugung von völlig neuartigen Materialien. Metallmischungen, die sonst nur unter Bedingungen der Mikrogravitation erzeugt werden können, sind somit realisierbar. Gleichzeitig ergeben sich durch die Verwendung von Materialien mit unterschiedlichen Farben die verschiedensten Ausgestaltungen entsprechend der Anwendungen oder Verwendungen.

Ein schichtweises Dithering-Verfahren nach einer weiteren Weiterbildung der Erfindung führt zur Möglichkeit der Realisierung von Farbverläufen in der Außenansicht der Miniaturkörper oder mikrostrukturierten Körper in vertikaler Richtung.

Ausführungsbeispiele der Erfindung sind in den Zeichnungen dargestellt und werden im Folgenden näher beschrieben. Es zeigen jeweils in einer prinzipiellen Darstellung:
- Fig. 1: eine Vorrichtung zur Herstellung von Miniaturkörpern oder mikrostrukturierten Körpern auf einem Träger in einer Bearbeitungskammer mit Laserstrahlen mit einer Ringrakel und einem Vorratsraum in einer Drauf und einer Seitenansicht,
- Fig. 2: eine Vorrichtung mit zwei Ringrakeln und zwei Vorratsräumen in einer Drauf- und einer Seitenansicht,
- Fig. 3: eine Vorrichtung mit dem Bauraum im Mittelpunkt und mehreren schwenkbaren Ringrakeln und

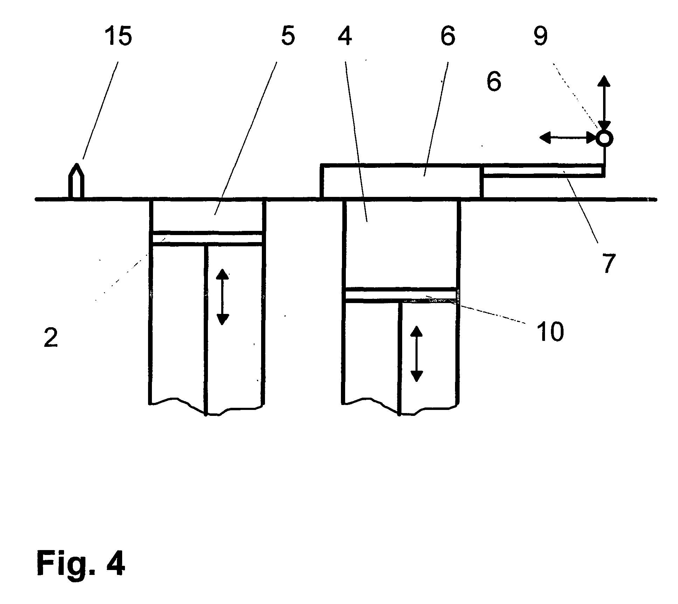

- Fig. 4: eine Vorrichtung mit einer Ringrakel, einem Vorratsraum für eine Paste oder ein Gel mit den Partikeln und einem Abstreifer zur Reinigung der Ringrakel.

Verfahren und Vorrichtungen zur Herstellung von Miniaturkörpern oder mikrostrukturierten Körpern auf einem Träger 2 in einer Bearbeitungskammer 1 mit Laserstrahlen 3 mindestens eines Lasers im Vakuum oder unter Schutzgas werden nachfolgend in den Ausführungsbeispielen zusammen näher erläutert.

### 1. Ausführungsbeispiel

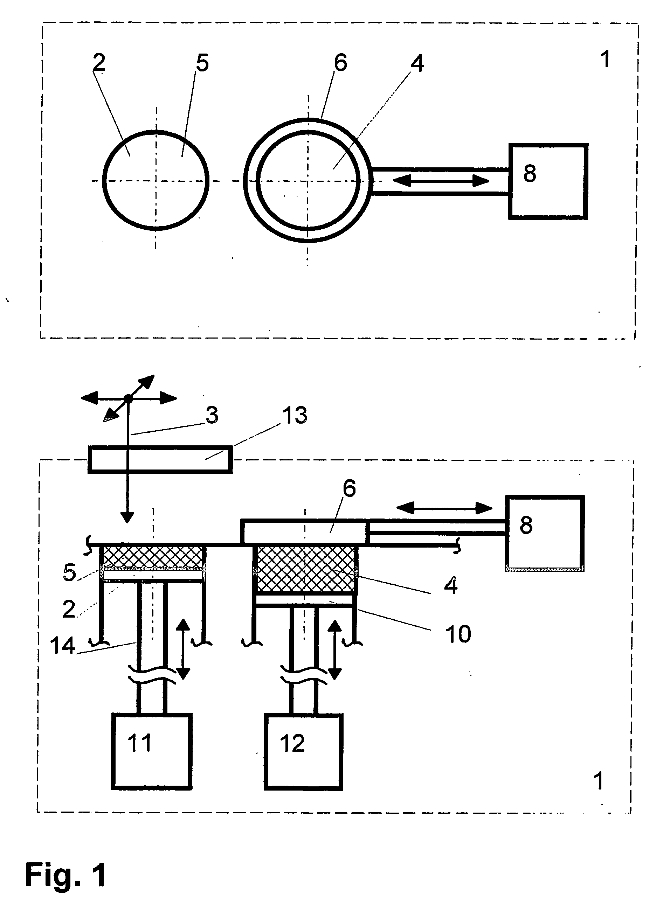

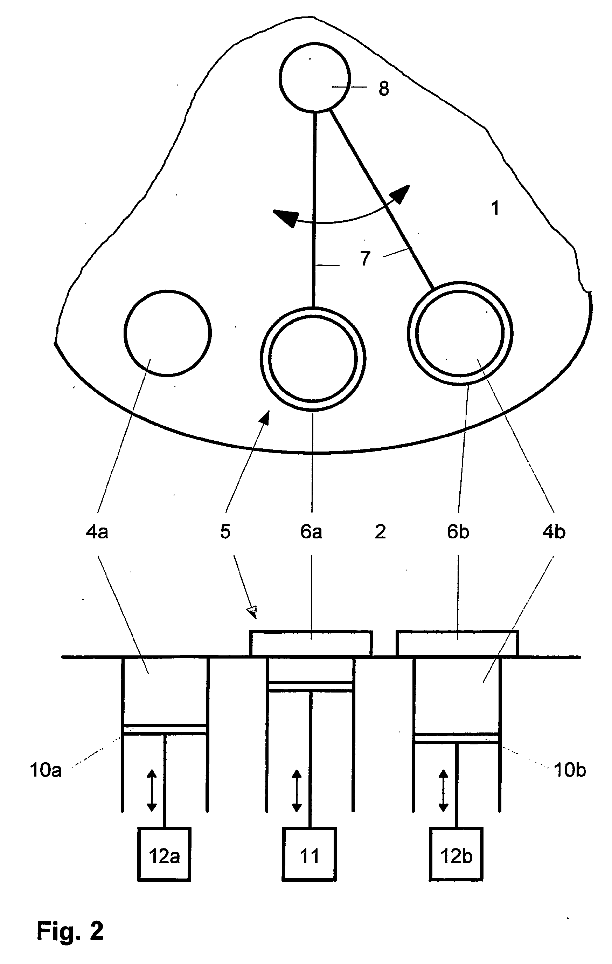

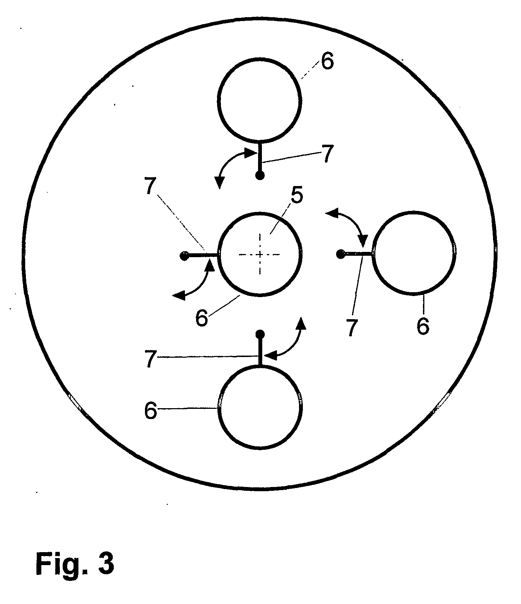

Mit der Anwendung des Verfahrens werden Miniaturkörper aus Wolfram mit einer Auflösung < 50 µm hergestellt. Dazu befindet sich in der Bearbeitungskammer 1 ein Träger 2 in einem Bauraum 5 für die Miniaturkörper, ein Vorratsraum 4 für Partikel als Pulver bestehend aus Wolfram-Nanopulver und eine Transportvorrichtung für Partikel von dem Vorratsraum 4 zu dem Bauraum 5 und Träger 2. Die Partikel des Wolfram-Nanopulvers haben vorzugsweise eine Größe von 300 nm. Die Transportvorrichtung ist eine Ringrakel 6 mit einer in sich geschlossenen Klinge. Eine kreisförmig ausgebildete Ringrakel 6 befindet sich an mindestens einem Konstruktionselement, welches weiterhin mit wenigstens einem Antrieb 8 gekoppelt ist. Ein Konstruktionselement ist im einfachsten Fall ein stangenförmiger Körper 7, der mit der Ringrakel 6 an einem translatorischen oder rotatorischen Antrieb 8 befestigt ist. Im letzteren Fall vollführt die Ringrakel 6 eine kreisförmige Bewegung, wobei in der Bewegungsbahn wenigstens ein Bauraum 5 mit einem Träger 2 und mindestens ein Vorratsraum 4 angeordnet sind. Die Fig. 1 zeigt eine derartige Vorrichtung mit einem Träger 2, einer Ringrakel 6 und einem Vorratsraum 4 in einer Drauf- und einer Seitenansicht und die Fig. 2 eine Vorrichtung mit einem Träger 2, zwei Ringrakeln 6a, 6b und zwei Vorratsräumen 4a, 4b in einer Drauf- und einer Seitenansicht jeweils als eine prinzipielle Darstellung. In einer Ausführungsform kann der Bauraum 5 auch in der Mitte der Bearbeitungskammer 1 angeordnet sein, wobei mehrere Ringrakel 6 schwenkbar um diesen Bauraum 5 angeordnet sind. Der Bauraum 5 befindet sich dabei im Schwenkbereich der Ringrakel 6. Die Fig. 3 zeigt eine derartige Anordnung prinzipiell in einer Draufsicht. In weiteren Ausführungsformen kann die Ringrakel 6
- an einer in seiner Länge veränderbaren und einstellbaren Einrichtung, zum Beispiel zwei ineinander geführten teleskopartigen Körpern, befestigt und mit einem rotatorischen Antrieb gekoppelt,
- an einer in seiner Länge veränderbaren und einstellbaren Einrichtung befestigt, wobei diese mit einem translatorischen Antrieb so gekoppelt ist, dass die Ringrakel in einer x- und y-Ebene bewegbar ist, oder
- an einem ebenen Drehgelenkgetriebe befestigt sein.
Mit der Ringrakel 6 wird das Pulver mit geringer Schüttdichte zu einer Schicht höherer Dichte, indem zuerst eine dickere Schicht erzeugt wird, die durch sukzessives gegenläufiges Rakeln mit der kreisförmigen Ringrakel 6, in deren Inneren sich der gesamte oder portionierte Pulvervorrat befindet, durch sukzessives gegenläufiges Rakeln abgeschert und dabei gleichzeitig komprimiert wird, worauf das überschüssige Pulver im Inneren der Rakelklinge verbleibt oder in den Vorratsraum 4 zurückgeführt wird. In der Bearbeitungskammer 1 sind sowohl der Träger 2 über einen Antrieb 11 als auch der Boden 10 des Vorratsraums 4 über einen weiteren Antrieb 12 gegenüber der Ringrakel 6 bewegbar. Vorteilhafterweise kann der Antrieb der Ringrakel 6 mit einem weiteren Antrieb als Antriebssystem 9 so verbunden sein, dass auch die Ringrakel 6 gegenüber dem Träger 2 und dem Boden 10 des Vorratsraums 4 bewegbar ist. Der Laser ist außerhalb der Bearbeitungskammer 1 so angeordnet, dass die Laserstrahlen 3 über einen Scanner und ein Fenster 13 in der Bearbeitungskammer 1 auf den Träger 2 gelangen können. Eine Ablenkung von Laserstrahlen 3 oder eine Kopplung des Lasers mit einer Bewegungseinrichtung sind bekannt und in den Fig. nicht dargestellt. Es werden vorzugsweise Laserstrahlen 3 eines gütegeschalteten Nd:YAG-Lasers mit einer Wellenlänge von 1064 nm bei einer Pulsdauer von 100 ns im Monomode eingesetzt. In Ausführungsformen können eine den Querschnitt des Laserstrahles 3 quadratisch formende Maske und/oder ein Homogenisierer oder ein umgekehrtes Gaußprofil als Intensitätsverteilung erzeugende Strahlformungseinheit in Strahlrichtung nach dem Laser angeordnet sein. In einem ersten Schritt wird die Bearbeitungskammer 1 auf einen Druck < 10⁻⁵ mbar evakuiert und das Wolfram-Nanopulver getrocknet. Danach wird ein Prozessgas, vorzugsweise Argon oder Helium bis zu einem Druck von 500 mbar eingelassen. Anschließend erfolgt ein Auftragen der Schichten aus dem Wolfram-Nanopulver im trockenen Zustand, wobei nach jedem Auftrag die Schicht mit den Laserstrahlen 3 so bestrahlt wird, dass die Wolfram-Nanopartikel partiell flächig, flächig oder linienförmig in der betreffenden Ebene zu kleine Kontaktbereichsstrukturen und Leerstellen aufweisenden und damit separierbaren Abstandskörpern sintern, wobei sowohl eine statische Festigkeit entsteht als auch eine geringe Beständigkeit gegen Scherkräfte besteht. Damit entstehen separierbare Abstandskörper zwischen dem Träger 2 und den Miniaturkörpern. Nach Ausbildung dieser Abstandskörper erfolgt das Auftragen weiterer Schichten aus dem Wolfram-Nanopulver im trockenen Zustand. Nach jedem Auftrag wird die Schicht mit den Laserstrahlen 3 so bestrahlt, dass die Wolfram-Nanopartikel entsprechend der Kontur der Miniaturkörper in dieser Ebene als Wandung und Innenbereich in dieser Ebene durchgehend miteinander und mit der unmittelbar darunter generierten Lage verbunden werden. Damit entstehen auf dem Träger 2 die separierbaren Abstandskörper und die Miniaturkörper. Während der Realisierung der Miniaturkörper können bestimmte Schichten auch so bestrahlt werden, dass zwischen Wandungen der Miniaturkörper die Wolfram-Nanopartikel partiell flächig, flächig oder linienförmig in der betreffenden Ebene zu kleine Kontaktbereichsstrukturen und Leerstellen aufweisenden und damit separierbaren Abstandskörpern sintern. Damit befinden sich auch zwischen den Miniaturkörpern separierbare Abstandskörper. Zur Erzeugung der separierbaren Abstandskörper wird vorzugsweise eine Pulsfrequenz von 8 kHz bei einer Laserleistung von 0,3 W und einer Scangeschwindigkeit von 600 mm/s verwendet. Die Wandungen und die Innenbereiche entstehen durch festes Sintern unter vorzugsweiser Anwendung einer Pulsfrequenz von 8 kHz bei einer Laserleistung von 1 W und einer Scangeschwindigkeit von 600 mm/s. Das Auftragen der Schichten aus dem Wolfram-Nanopulver mit den Wolfram-Nanopartikeln erfolgt durch Absenken des Trägers 2 um einen Betrag ≤ 1 µm und anschließendem Rakeln. Mit der Beaufschlagung des Trägers 2 mit Hörschall kann die jeweilige aufgetragene Schicht vor dem Bestrahlen mit Laserstrahlen 3 verdichtet werden. Die Schwingungen mit Frequenzen von ca. 500 Hz werden vorzugsweise durch die Hubachse 14 des Trägers 3 selbst erzeugt. Durch Beaufschlagung des Trägers 2 mit den Miniaturkörpern mit Ultraschall werden die Miniaturkörper vom Träger und von den Abstandskörpern getrennt, wobei der Träger 2 mit einer Einrichtung zur Erzeugung von Ultraschall gekoppelt ist.

In einer weiteren Ausführungsform werden Miniaturkörper aus Kupfer und Wolfram/Kupfer mit der Verwendung entweder eines Pulvers aus Kupfer-Mikropartikeln oder eines Gemisches aus Kupfermikro- und Wolfram-Nanopartikeln erzeugt. Die Absenkung des Trägers 2 erfolgt in Schritten von ca. 2 µm.

Miniaturkörper aus Silber und Wolfram/Silber mit der Verwendung entweder eines Pulvers aus Silber-Mikropatikeln oder eines Gemisches aus Silbermikro- und Wolfram-Nanopartikeln können in einer weiteren Ausführungsform erzeugt werden. Die Absenkung des Trägers 2 erfolgt in Schritten von ca. 2 µm.

Miniaturkörper aus Titan können in einer weiteren Ausführungsform mit der Verwendung eines Pulvers aus Titan-Mikro- und/oder Nanopartikeln erzeugt werden. Die Absenkung des Trägers 2 erfolgt in Schritten von ca. 2 µm.

Miniaturkörper aus Aluminium können in einer weiteren Ausführungsform unter Verwendung von Pulver aus Aluminium-Mikropartikeln hergestellt werden. Der Sintervorgang erfolgt mit kleinerer Laserleistung von 0,8 W und zur Generierung der separierbaren Abstandskörper wird eine Leistung von 0,25 W verwendet.

In einer weiteren Ausführungsform können Miniaturkörper aus Aluminium/Titan mit der Verwendung eines Gemisches aus Aluminium- und Titan-Mikro- und/oder Nanopartikeln erzeugt werden. Der Sintervorgang erfolgt mit einer Laserleistung von 0,8 W und zur Generierung der separierbaren Abstandskörper wird eine Leistung von 0,25 W verwendet.

In einer weiteren Ausführungsform besteht die Schicht aus einer Paste mit den Wolfram-Nanopartikeln und wird im Vakuum mit einem Druck unmittelbar über dem Dampfdruck des Binders vorgetrocknet und durch Erwärmung mittels Laserstrahlen 3 entbindert. Die Ringrakel 6 wird vor der Rückbewegung angehoben und anschließend über eine Reinigungseinrichtung in Form einer Gummilippe 15 bewegt und somit gereinigt (Darstellung in der Fig. 3).

### 2. Ausführungsbeispiel

Ein Verfahren und eine Vorrichtung zur Herstellung von mikrostrukturierten Körpern in Form von Zahninlays mit Laserstrahlen 3 mindestens eines Lasers im Vakuum oder unter Schutzgas auf einem Träger 2 in einer Bearbeitungskammer 1 werden nachfolgend näher erläutert.

Die Vorrichtung entspricht im Wesentlichen denen des ersten Ausführungsbeispiels. Das Verfahren wird jedoch nur unter Schutzgas durchgeführt. Die Schicht wird aus Paste oder Gel erzeugt. Die Vortrocknung und Entbinderung der Schicht geschieht durch schnelles Scannen des Laserstrahls 3 über die gesamte Schicht. Die Schichtdicke ist ≥ 5 µm und ≤ 20 µm. Der Laser arbeitet im Multimode-Betrieb, wodurch ein größerer Strahlfleckdurchmesser erzeugt wird. Die Laserleistung beträgt vorzugsweise 3 W zum Sintern der mikrostrukturierten Körper und vorzugsweise 1 W zum Sintern der separierbaren Abstandskörper. Die Rakel ist vorzugsweise eine Ringrakel 6. Nach dem Auftragvorgang wird die Ringrakel 6 über das Antriebssystem 9 angehoben und auf eine Gummilippe 15 als Reinigung geführt. Nach dem Reinigungsvorgang wird die Ringrakel 6 wieder über dem Vorratsraum 4a platziert und kann neu befüllt werden. Zusätzlich befindet sich in der Vorrichtung mindestens ein weiterer Vorratsraum 4b für Paste oder Gel. In den mindestens zwei Vorratsräumen 4a, 4b befinden sich hinsichtlich einer Färbung nach dem Sintern unterschiedliche Pasten oder Gele, vorzugsweise weiß und graugelb. Bei der Herstellung können durch Anwendung eines Dithering-Verfahrens in Form von sich entsprechend wechselnden Schichten aus den unterschiedlichen Pasten oder Gelen alle Farben zwischen weiß und graugelb erzeugt werden. Dadurch ist eine optimale farbliche Anpassung des Inlays an den Zahn möglich. Alternativ dazu werden zwei kreisförmig bewegbare Ringrakel 6, die gleichzeitig als Vorratsraum dienen, eingesetzt. Die Beschickung der Ringrakel 6 erfolgt durch das aufklappbar ausgestaltete Einkoppelfenster 13 für die Laserstrahlen 3 von oben. Der Vorteil dieser Variante besteht darin, dass die Ringrakel 6 nur in eine Richtung bewegt werden muss und damit kein Überfahren der neu aufgebrachten Schicht erfolgt. Ein Anheben der Ringrakel ist nicht notwendig. Zur Reinigung werden die Ringrakel 6 an einem Abstreifer vorbeigeführt.

In weiteren Ausführungsformen der Ausführungsbeispiele kann ein Miniaturkörper oder ein mikrostrukturierter Körper mit einem vorgefertigten Körper als Bestandteil realisiert werden. Der vorgefertigte Körper ist dabei auf dem Träger 2 angeordnet. Beim ersten Rakeln wird der Raum um den vorgefertigten Körper und über dem Träger 2 vollständig mit Pulver aufgefüllt. Dies schafft eine ausreichende Fixierung des vorgefertigten Körpers auf dem Träger 2. Anschließend werden Schichten mit oder aus Partikeln aufgetragen und nach jedem Auftrag die jeweilige Schicht mit Laserstrahlen 3 sowohl entsprechend den Konturen des Miniaturkörpers oder mikrostrukturierten Körpers in dieser Ebene so bestrahlt, dass Partikel als Wandung und Innenbereich des zu fertigenden Miniaturkörpers oder mikrostrukturierten Körpers in dieser Ebene durchgehend durch Sintern miteinander in der ersten Schicht zusätzlich mit dem vorgefertigten Körper verbunden werden und damit ein Miniaturkörper oder mikrostrukturierter Körper entsteht und dass auch partiell flächig, flächig oder linienförmig in dieser Ebene zu kleine Kontaktbereichsstrukturen und Leerstellen aufweisenden und damit separierbaren Abstandskörpern gesintert werden, wobei sowohl eine statische Festigkeit entsteht als auch eine geringe Beständigkeit gegen Scherkräfte besteht. Die Vereinzelung des Miniaturkörpers oder des mikrostrukturierten Körpers und der Abstandskörper erfolgt vorteilhafterweise mit dem Beaufschlagen von Ultraschall. Zwischen Träger 2 und dem Miniaturkörper oder mikrostrukturierten Körper besteht keine feste Bindung, so dass eine Trennung leicht möglich ist.

## Patentansprüche

1. Verfahren zur Herstellung von Miniaturkörpern oder mikrostrukturierten Körpern auf einem Träger in einer Bearbeitungskammer mit Laserstrahlen mindestens eines Lasers im Vakuum oder unter Schutzgas, **dadurch gekennzeichnet, dass** Schichten mit oder aus Partikeln aufgetragen werden und nach jedem Auftrag die jeweilige Schicht mit Laserstrahlen (3) so bestrahlt wird, dass Partikel partiell flächig, flächig oder linienförmig in der betreffenden Ebene zu kleine Kontaktbereichsstrukturen und Leerstellen aufweisenden und damit separierbaren Abstandskörpern sintern, wobei sowohl eine statische Festigkeit entsteht als auch eine geringe Beständigkeit gegen Scherkräfte besteht, dass Schichten mit oder aus Partikeln aufgetragen werden und nach jedem Auftrag die jeweilige Schicht zumindest entsprechend den Konturen der Miniaturkörper oder mikrostrukturierten Körper in dieser Ebene so bestrahlt wird, dass Partikel als Wandung und Innenbereich der Miniaturkörper oder mikrostrukturierten Körper in dieser Ebene durchgehend durch Sintern miteinander verbunden werden und damit die Miniaturkörper oder mikrostrukturierten Körper entstehen und dass der Träger (2) mit den Miniaturkörpern oder mikrostrukturierten Körpern und den separierbaren Abstandskörpern mit Ultraschall zur Trennung der Miniaturkörper oder mikrostrukturierten Körper vom Träger (2) und von den separierbaren Abstandskörpern beaufschlagt wird.

2. Verfahren nach Patentanspruch 1, **dadurch gekennzeichnet, dass** Schichten mit oder aus Partikeln aufgetragen werden und nach jedem Auftrag die jeweilige Schicht mit Laserstrahlen (3) so bestrahlt wird, dass Partikel partiell flächig, flächig oder linienförmig in der betreffenden Ebene zu kleine Kontaktbereichsstrukturen und Leerstellen aufweisenden und damit separierbaren Abstandskörpern sintern, wobei sowohl eine statische Festigkeit entsteht als auch eine geringe Beständigkeit gegen Scherkräfte besteht, dass Schichten mit oder aus Partikeln aufgetragen werden und nach jedem Auftrag die jeweilige Schicht mit Laserstrahlen (3) sowohl entsprechend den Konturen der Miniaturkörper oder mikrostrukturierten Körper in dieser Ebene so bestrahlt wird, dass Partikel als Wandung und Innenbereich der Miniaturkörper oder mikrostrukturierten Körper in dieser Ebene durchgehend durch Sintern miteinander verbunden werden und damit die Miniaturkörper oder mikrostrukturierten Körper entstehen, als auch partiell flächig, flächig oder linienförmig in dieser Ebene zu kleine Kontaktbereichsstrukturen und Leerstellen aufweisenden und damit separierbaren Abstandskörpern sintern, wobei sowohl eine statische Festigkeit entsteht als auch eine geringe Beständigkeit gegen Scherkräfte besteht, und dass der Träger (2) mit den Miniaturkörpern oder mikrostrukturierten Körpern und den separierbaren Abstandskörpern mit Ultraschall zur Trennung der Miniaturkörper oder mikrostrukturierten Körper vom Träger (2) und von den separierbaren Abstandskörpern beaufschlagt wird.

3. Verfahren nach Patentanspruch 1, **dadurch gekennzeichnet, dass** Schichten mit oder aus Partikeln auf wenigstens einen auf dem Träger (2) angeordneten und von Schichten mit oder aus Partikeln umgebenden vorgefertigten Körper aufgetragen werden und nach jedem Auftrag die jeweilige Schicht mit Laserstrahlen (3) sowohl entsprechend der Kontur oder der Konturen der Miniaturkörper oder mikrostrukturierten Körper in dieser Ebene so bestrahlt wird, dass Partikel als Wandung und Innenbereich der Miniaturkörper oder mikrostrukturierten Körper in dieser Ebene durchgehend durch Sintern miteinander in der ersten Schicht zusätzlich mit dem vorgefertigtem Körper verbunden werden und damit die Miniaturkörper oder mikrostrukturierten Körper entstehen, als auch partiell flächig, flächig oder linienförmig in dieser Ebene zu kleine Kontaktbereichsstrukturen und Leerstellen aufweisenden und damit separierbaren Abstandskörpern sintern, wobei sowohl eine statische Festigkeit entsteht als auch eine geringe Beständigkeit gegen Scherkräfte besteht, und dass der Träger (2) mit den Miniaturkörpern oder mikrostrukturierten Körpern und den separierbaren Abstandskörpern mit Ultraschall zur Trennung der Miniaturkörper oder mikrostrukturierten Körper von den separierbaren Abstandskörpern beaufschlagt wird.

4. Verfahren nach einem der Patentansprüche 1, 2 oder 3, **dadurch gekennzeichnet, dass** die Pulsfrequenz und die Geschwindigkeit, mit der die Laserstrahlen (3) über die Schicht geführt werden, zur Erzeugung der Miniaturkörper oder mikrostrukturierten Körper und der Abstandskörper gleich sind und dass die Laserleistung bei der Herstellung der Abstandskörper kleiner als die bei der Herstellung der Miniaturkörper oder mikrostrukturierten Körper ist oder dass die Laserleistung zur Erzeugung der Miniaturkörper oder mikrostrukturierten Körper und der Abstandskörper gleich ist und dass die Pulsfrequenz und die Geschwindigkeit, mit der die Laserstrahlen (3) über die Schicht geführt werden, bei der Herstellung der Abstandskörper größer als bei der Herstellung der Miniaturkörper oder mikrostrukturierten Körper ist.

5. Verfahren nach einem der Patentansprüche 1, 2, 3 oder 4, **dadurch gekennzeichnet, dass** die Schichten mit oder aus den Partikeln mit einer Drucktechnik, durch Sprühen oder mit wenigstens einer Rakel aufgetragen werden.

6. Verfahren nach einem der Patentansprüche 1, 2, 3, 4 oder 5, **dadurch gekennzeichnet, dass** die Schichten aus einer Paste mit den Partikeln im Vakuum mit einem Druck unmittelbar über dem Dampfdruck des Binders beaufschlagt und durch Erwärmung mittels Laserstrahlen (3) entbindert werden.

7. Verfahren nach Patentanspruch 5, **dadurch gekennzeichnet, dass** über das Beaufschlagen des Trägers und/oder der Rakel mit Hör- oder Ultraschall und/oder ein horizontales Drehen der Rakel die jeweilige aufgetragene Schicht vor dem Bestrahlen mit Laserstrahlen (3) verdichtet wird.

8. Verfahren nach Patentanspruch 5, **dadurch gekennzeichnet, dass** die Rakel in einer geschlossenen Bewegungsbahn in eine Richtung über den Träger (2) geführt wird.

9. Verfahren nach einem der vorstehenden Patentansprüche, **dadurch gekennzeichnet, dass** für verschiedene Schichten mindestens zwei unterschiedliche Materialien mit gleichen oder verschiedenen Farben verwendet werden.

10. Verfahren nach Patentanspruch 9, **dadurch gekennzeichnet, dass** ein schichtweises Dithering-Verfahren angewandt wird.

## Claims

1. Method for producing miniature bodies or microstructured bodies on a support in a processing chamber by laser beams of at least one laser in a vacuum or protective gas atmosphere, **characterized in that** layers comprising or consisting of particles are applied and, after each application, the respective layer is irradiated with laser beams (3) in such a way that particles are sintered in a partially planar, planar or linear manner on the corresponding plane to form spacer bodies that have small contact area structures and voids and can thus be separated, thereby producing both static stability and a low resistance to shearing forces, **in that** layers comprising or consisting of particles are applied and, after each application, the respective layer is irradiated at least in accordance with the contours of the miniature bodies or microstructured bodies in this plane in such a way that particles are bonded together by sintering throughout as the wall and inner region of the miniature bodies or microstructured bodies in this plane and in this way the miniature bodies or microstructured bodies are produced, and **in that** the support (2) with the miniature bodies or microstructured bodies and the separable spacer bodies is subjected to ultrasound to separate the miniature bodies or microstructured bodies from the support (2) and from the separable spacer bodies.

2. Method according to Patent Claim 1, **characterized in that** layers comprising or consisting of particles are applied and, after each application, the respective layer is irradiated with laser beams (3) in such a way that particles are sintered in a partially planar, planar or linear manner on the corresponding plane to form spacer bodies that have small contact area structures and voids and can thus be separated, thereby producing both static stability and a low resistance to shearing forces, **in that** layers comprising or consisting of particles are applied and, after each application, the respective layer is both irradiated with laser beams (3) in accordance with the contours of the miniature bodies or microstructured bodies in this plane in such a way that particles are bonded together by sintering throughout as the wall and inner region of the miniature bodies or microstructured bodies in this plane and in this way the miniature bodies or microstructured bodies are produced, and sintered in a partially planar, planar or linear manner in this plane to form spacer bodies that have small contact area structures and voids and can thus be separated, thereby producing both static stability and a low resistance to shearing forces, and **in that** the support (2) with the miniature bodies or microstructured bodies and the separable spacer bodies is subjected to ultrasound to separate the miniature bodies or microstructured bodies from the support (2) and from the separable spacer bodies.

3. Method according to Patent Claim 1, **characterized in that** layers comprising or consisting of particles are applied to at least one prefabricated body arranged on the support (2) and surrounded by layers comprising or consisting of particles and, after each application, the respective layer is irradiated with laser beams (3) in accordance with the contour or contours of the miniature bodies or microstructured bodies in this plane in such a way that particles are bonded together by sintering throughout as the wall and inner region of the miniature bodies or microstructured bodies in this plane, in the first layer additionally bonded with the prefabricated body, and in this way the miniature bodies or microstructured bodies are produced, and sintered in a partially planar, planar or linear manner in this plane to form spacer bodies that have small contact area structures and voids and can thus be separated, thereby producing both static stability and a low resistance to shearing forces, and **in that** the support (2) with the miniature bodies or microstructured bodies and the separable spacer bodies is subjected to ultrasound to separate the miniature bodies or microstructured bodies from the separable spacer bodies.

4. Method according to one of Patent Claims 1, 2 and 3, **characterized in that** the pulse frequency and the speed with which the laser beams (3) are made to pass over the layer to generate the miniature bodies or microstructured bodies and the spacer bodies are the same and **in that** the laser power is less during the production of the spacer bodies than during the production of the miniature bodies or microstructured bodies or **in that** the laser power for generating the miniature bodies or microstructured bodies and the spacer bodies is the same and **in that** the pulse frequency and the speed with which the laser beams (3) are made to pass over the layer are greater during the production of the spacer bodies than during the production of the miniature bodies or microstructured bodies.

5. Method according to one of Patent Claims 1, 2, 3 and 4, **characterized in that** the layers comprising or consisting of the particles are applied by a printing technique, by spraying or by at least one doctor blade.

6. Method according to one of Patent Claims 1, 2, 3, 4 and 5, **characterized in that** the layers consisting of a paste comprising the particles are exposed in a vacuum to a pressure directly above the vapour pressure of the binder and are debinded by heating by means of laser beams (3).

7. Method according to Patent Claim 5, **characterized in that**, before being irradiated with laser beams (3), the respective applied layer is compacted by means of exposing the support and/or the doctor blades to audible sound or ultrasound and/or by horizontally turning the doctor blades.

8. Method according to Patent Claim 5, **characterized in that** the doctor blades are made to pass in a direction over the support (2) in a closed path of movement.

9. Method according to one of the preceding patent claims, **characterized in that** at least two different materials with the same or different colours are used for different layers.

10. Method according to Patent Claim 9, **characterized in that** a layer-by-layer dithering method is used.

## Revendications

1. Procédé pour fabriquer par des faisceaux laser d'au moins un laser des corps miniatures ou des corps microstructurés sur un support placé dans une chambre de traitement sous vide ou sous gaz protecteur,
**caractérisé en ce que**
des couches présentant des particules ou constituées de particules sont appliquées et **en ce qu'**après chaque application, la couche concernée est irradiée par des faisceaux laser (3) de telle sorte que les particules se frittent sur une partie de leur surface, sur leur surface ou en ligne dans le plan concerné pour former des corps d'écartement présentant de petites structures de zone de contact et des emplacements vides, et donc des corps d'écartement séparables, ce qui confère à la fois une résistance mécanique statique et une petite résistance vis-à-vis des forces de cisaillement,
**en ce que** des couches contenant des particules ou constituées de particules sont appliquées et **en ce qu'**après chaque application, la couche concernée est irradiée dans ce plan au moins en correspondance aux contours des corps miniatures ou des corps microstructurés de telle sorte que les particules soient reliées les unes aux autres de manière continue dans ce plan par frittage sous la forme d'une paroi et d'une partie intérieure des corps miniatures ou des corps microstructurés et qu'ainsi l'on obtienne les corps miniatures ou les corps microstructurés et
**en ce que** des ultrasons sont appliqués sur le support (2) qui présente les corps miniatures ou les corps microstructurés et les corps d'écartement séparables, de manière à séparer les corps miniatures ou les corps microstructurés du support (2) et des corps d'écartement séparables.

2. Procédé selon la revendication 1, **caractérisé en ce que** des couches présentant des particules ou constituées de particules sont appliquées et **en ce qu'**après chaque application, la couche concernée est irradiée par des faisceaux laser (3) de telle sorte que les particules se frittent sur une partie de leur surface, sur leur surface ou en ligne dans le plan concerné pour former des corps d'écartement présentant de petites structures de zone de contact et des emplacements vides, et donc des corps d'écartement séparables, ce qui confère à la fois une résistance mécanique statique et une petite résistance vis-à-vis des forces de cisaillement,
**en ce que** des couches contenant des particules ou constituées de particules sont appliquées et **en ce qu'**après chaque application, la couche concernée est irradiée dans ce plan par des faisceaux laser (3) au moins en correspondance aux contours des corps miniatures ou des corps microstructurés de telle sorte que les particules soient reliées les unes aux autres de manière continue dans ce plan par frittage sous la forme d'une paroi et d'une partie intérieure des corps miniatures ou des corps microstructurés et qu'ainsi l'on obtienne les corps miniatures ou les corps microstructurés,
**en ce que** les particules se frittent également sur une partie de leur surface, sur leur surface ou en ligne dans le plan concerné pour former des corps d'écartement présentant de petites structures de zone de contact et des emplacements vides, et donc des corps d'écartement séparables, ce qui confère à la fois une résistance mécanique statique et une petite résistance vis-à-vis des forces de cisaillement, et
**en ce que** des ultrasons sont appliqués sur le support (2) qui présente les corps miniatures ou les corps microstructurés et les corps d'écartement séparables, de manière à séparer les corps miniatures ou les corps microstructurés du support (2) et des corps d'écartement séparables.

3. Procédé selon la revendication 1, **caractérisé en ce que** des couches qui présentent des particules ou sont constituées de particules sont appliquées sur au moins un corps préfabriqué disposé sur le support (2) et entouré de couches contenant des particules ou constituées de particules et **en ce qu'**après chaque application, la couche concernée est irradiée dans ce plan par des faisceaux laser (3) à la fois en suivant le contour ou les contours des corps miniatures ou des corps microstructurés, **en ce que** des particules sont reliées de manière continue dans ce plan sous la forme d'une paroi et d'une partie intérieure des corps miniatures ou des corps microstructurés par frittage les unes aux autres dans la première couche et en supplément avec le corps préfabriqué et qu'ainsi l'on obtient les corps miniatures ou les corps microstructurés, ce qui confère à la fois une résistance mécanique statique et une petite résistance vis-à-vis des forces de cisaillement, et **en ce que** des ultrasons sont appliqués sur le support (2) qui présente les corps miniatures ou les corps microstructurés et les corps d'écartement séparables, de manière à séparer les corps miniatures ou les corps microstructurés -des corps d'écartement séparables.

4. Procédé selon l'une des revendications 1, 2 ou 3, **caractérisé en ce que** les fréquences de pulsation et les vitesses auxquelles les faisceaux laser (3) sont guidés sur la couche pour former les corps miniatures ou les corps microstructurés et les corps d'écartement sont identiques et **en ce que** la puissance laser lors de la réalisation des corps d'écartement est plus petite que lors de la réalisation des corps miniatures ou des corps microstructurés ou **en ce que** les puissances laser utilisées pour former les corps miniatures ou les corps microstructurés et les corps d'écartement sont identiques et **en ce que** la fréquence de pulsation et la vitesse à laquelle les faisceaux laser (3) sont guidés sur la couche lors de la réalisation des corps d'écartement sont supérieures à celles utilisées lors de la réalisation des corps miniatures ou des corps microstructurés.

5. Procédé selon l'une des revendications 1, 2, 3 ou 4, **caractérisé en ce que** les couches présentant les particules ou constituées des particules sont appliquées à l'aide d'une technique d'impression, par pulvérisation ou à l'aide d'au moins un racloir.

6. Procédé selon l'une des revendications 1, 2, 3, 4 ou 5, **caractérisé en ce qu'**une pression immédiatement supérieure à la tension de vapeur du liant est appliquée sur les couches constituées d'une pâte contenant les particules et **en ce que** les couches sont débarrassées du liant par chauffage au moyen de faisceaux laser (3).

7. Procédé selon la revendication 5, **caractérisé en ce qu'**avant l'irradiation par les faisceaux laser (3), chaque couche appliquée est comprimée par application d'ondes sonores ou ultrasoniques sur le support et/ou le racloir et/ou par rotation horizontale du racloir.

8. Procédé selon la revendication 5, **caractérisé en ce que** le racloir est guidé dans un sens sur un parcours de déplacement fermé au-dessus du support (2).

9. Procédé selon l'une des revendications précédentes, **caractérisé en ce qu'**au moins deux matériaux différents qui présentent une même couleur ou des couleurs différentes sont utilisés pour différentes couches.

10. Procédé selon la revendication 9, **caractérisé en ce qu'**il applique une opération de vibration couche par couche.
